(19) Europäisches Patentamt

European Patent Office

Office européen des brevets

(11) **EP 1 215 520 B1**

(12) **EUROPEAN PATENT SPECIFICATION**

(45) Date of publication and mention
of the grant of the patent:
**25.02.2004 Bulletin 2004/09**

(51) Int Cl.[7]: **G02B 17/00**, G02B 19/00,
G02B 6/42, F21V 7/06,
A61B 18/18

(21) Application number: **01310419.5**

(22) Date of filing: **13.12.2001**

(54) **Optical arrangement for the collection of light**

Lichtsammelndes optisches System

Dispositif optique de collection de lumière

(84) Designated Contracting States:
**AT BE CH CY DE DK ES FI FR GB GR IE IT LI LU
MC NL PT SE TR**

(30) Priority: **13.12.2000 GB 0030311**

(43) Date of publication of application:
**19.06.2002 Bulletin 2002/25**

(73) Proprietor: **Carl Zeiss Meditec AG
07745 Jena (DE)**

(72) Inventor: **Colles, Michael John
Biggar ML12 6JJ (GB)**

(74) Representative: **Murnane, Graham John et al
Murgitroyd & Company,
165-169 Scotland Street
Glasgow G5 8PL (GB)**

(56) References cited:
**WO-A-01/02890            US-A- 4 241 382**

• **PATENT ABSTRACTS OF JAPAN vol. 017, no.
461 (P-1598), 23 August 1993 (1993-08-23) & JP
05 107643 A (FUJITSU GENERAL LTD), 30 April
1993 (1993-04-30)**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

## Description

This invention relates to light collection, and relates more particularly but not exclusively to an optical arrangement for the collection of light from a point source of light or from an extended source of light.

Despite the widespread use of lasers in a range of medical applications there is a substantial and increasing demand for alternative non-laser-based light sources. Devices now available can provide energy outputs and pulse durations equivalent to similar laser systems. Although such light sources provide optical energy over a much greater range of wavelengths than a laser, there is growing clinical evidence of their efficacy. The larger systems are based on the use of filtered light from a flashlamp.

Known systems use a collection arrangement for the light which, along with the lamp itself, is contained within a handpiece. Of necessity this handpiece is then a substantial size and is linked to a utility console via a large umbilical supplying high current to the lamp together with conduits for flow and return of cooling fluid. Undoubtedly light delivered by optical fibre would be more convenient, less bulky and intrinsically safer. Known optical arrangements for the collection of light from extended light sources are most efficient when the light is used directly as in the handpiece-mounted designs, for example as shown in US5626631.

The situation is less satisfactory in the case of light collection systems designed to couple the light directly into a light-transmitting optical fibre, such as that disclosed in US 4241382. A laser light source has a clear advantage in terms of its high degree of directionality and consequently efficient coupling into an optical fibre in comparison with the light from an extended incoherent source which is emitted over a far greater range of angles. Various reflecting and reflecting/refracting collection optics have been proposed, but these optics couple into a fibre with a relatively low efficiency even when used with point sources of light. For example, a parabolic reflector will collect light from a point source and redirect it as a parallel beam. Such a parallel beam may then be focused onto the input face of an optical fibre. However, the efficiency of such an arrangement is limited by the amount of light collected by the parabolic reflector as a proportion of the light emitted from the point source, and light which is not intercepted and reflected by the parabolic reflector is dissipated without contributing to useful output.

It is to be noted that the term "light" as used in this specification includes light of which part or all of its spectrum is normally visible to the unaided human eye, but the scope of the term "light" is not restricted to such partly or wholly visible light and extends to include analogous forms of electromagnetic radiation whether or not any part of the spectrum thereof is visible; moreover, the term "light" includes both incoherent light and coherent light, and also includes monochromatic light and polychromatic light.

The present invention provides an optical arrangement as defined in claim 1.

Preferably, the light-accepting area is on the second side of the lens on the longitudinal axis of the lens. The light-accepting area may be the end of a light-transmitting optical fibre means. Preferably, the lens is optically substantially symmetrical about the longitudinal axis extending therethrough.

Preferably, the paraboloidal reflecting surface is substantially circularly symmetrical about the longitudinal axis of the first reflector.

Preferably the second reflector is substantially circularly symmetrical about the longitudinal axis of the lens.

The optical arrangement may further comprise the light source. The light source may be a point source, or a source of small dimension which is physically close to functioning as a point source.

Preferably the light source is located at the focus point of the paraboloidal reflecting surface.

The lens may be formed as two longitudinally separate components having a gap mutually separating these two components of the lens, the gap being adapted to receive optical filter means for predetermined spectral modification of light collected by the optical arrangement. The optical filter means may comprise a dissipative absorber of selected optical frequencies, or the optical filter means may comprise a frequency-transforming absorber/retransmitter of selected optical frequencies, in both cases to diminish spectral power at unwanted frequencies and, in the latter case, to convert unwanted frequencies to other frequencies that are preferably beneficial or at least relatively non-harmful. The optical filter means may be a solid or a liquid, which may either be static or flowing through the lens (e.g. where a dye solution is employed for regenerative frequency transformation).

According to a second aspect of the invention there is provided an optical arrangement for the collection of light from an extended source which emits light (when in operation) in at least first and second sets of directions, and for delivering the collected light to a light-accepting area, the optical arrangement according to the second aspect of the present invention comprising an optical arrangement according to the first aspect of the present invention but adapted to receive the extended source in place of the point source.

Where the extended source extended is substantially linearly extended along a given axis, e.g. a straight tubular lamp, the extended source is preferably arranged with that given axis aligned substantially along the longitudinal axis of the lens.

According to a third aspect of the present invention there is provided a light collecting system comprising an optical arrangement according to the first aspect of the present invention in combination with a point source of light and a light-transmitting optical fibre, the point source being located at the focus point of the paraboloidal reflecting surface, and a light-accepting end of the optical fibre being located at the light-accepting area on the second side of the lens substantially on the longitudinal axis of the lens and distant from the lens substantially by the focal length.

According to a fourth aspect of the present invention there is provided a light collecting system comprising an optical arrangement according to the second aspect of the present invention in combination with an extended source of light and a light-transmitting optical fibre, the extended source being located at the focus point of the paraboloidal reflecting surface, and a light-accepting end of the optical fibre being located at the light-accepting area on the second side of the lens substantially on the longitudinal axis of the lens and distant from the lens substantially by the second focal length.

In both the third and fourth aspects of the present invention, the longitudinal axis of the optical fibre at the light accepting end is preferably substantially coincident with the longitudinal axis of the lens.

In both the third and fourth aspects of the present invention, the optical fibre is preferably connected at its end remote from the light accepting end to a handpiece adapted to transmit light from the optical fibre to an object to be treated by light.

According to fifth aspect of the present invention, there is provided a light-emitting handpiece comprising a light source according to the third or fourth aspects of the present invention minus the optical fibre thereof, and adapted to be manually manipulable whereby light from the handpiece can be directly applied to a selected portion of the skin of a patient or directly applied to any other selected light-receiving surface.

Embodiments of the invention will now be described by way of example, with reference to the accompanying drawings wherein:-

Fig. 1 is a schematic diagram of an optical apparatus according to a first embodiment of the invention employing a point source of light;

Fig. 2 is a schematic diagram of an optical apparatus according to a second embodiment of the invention employing an extended source of light; and

Fig. 3 is a schematic diagram of a light-emitting handpiece according to the present invention in use.

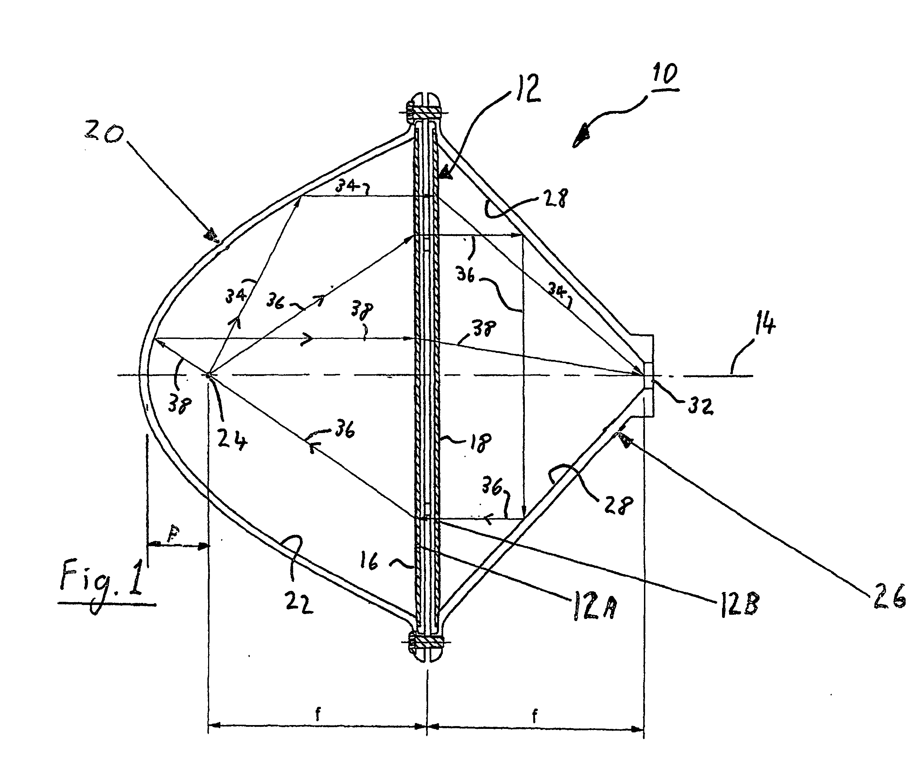

Referring first to Fig. 1, a first embodiment of light collecting system 10 in accordance with the invention comprises a convergently focussing transmission lens 12 which is circularly symmetrical about a longitudinal axis 14. The lens 12 has a focal length f, a first side 16, and a second side 18.

The light collecting system 10 further comprises a first reflector in the form of a paraboloidal mirror 20 disposed on the first side 16 of the lens 12 to have its internal paraboloidal reflecting surface 22 facing along the axis 14 towards the lens 12. The reflecting surface 22 is notionally formed by rotation of a parabolic generatrix around a longitudinal axis of the mirror 20, and the mirror 20 is arranged to have this longitudinal axis of circular symmetry coincident with the longitudinal axis 14 of the lens 12 (i.e. the lens 12 and the mirror 20 are coaxial). The focus point 24 of the paraboloidal reflecting surface 22 thus lies on the longitudinal axis 14, and the mirror 20 is disposed such that the focus point 24 is distant from the lens 12 by exactly the focal length f.

The light collecting system 10 additionally comprises a second reflector in the form of a retroreflector 26 disposed across the axis 14 on the second side of the lens 12, with a retroreflecting array of internal reflecting surfaces 28 facing towards the lens 12. In its simplest form, the array of reflecting surfaces 28 can be constituted by three mutually orthogonal planar mirrors, i.e. the known "cube corner" array. However, other forms of retroreflector can be employed without departing from the scope of the invention. The centre of the retroreflector 26 is provided with a light accepting area 32 which does not reflect back light received on it.

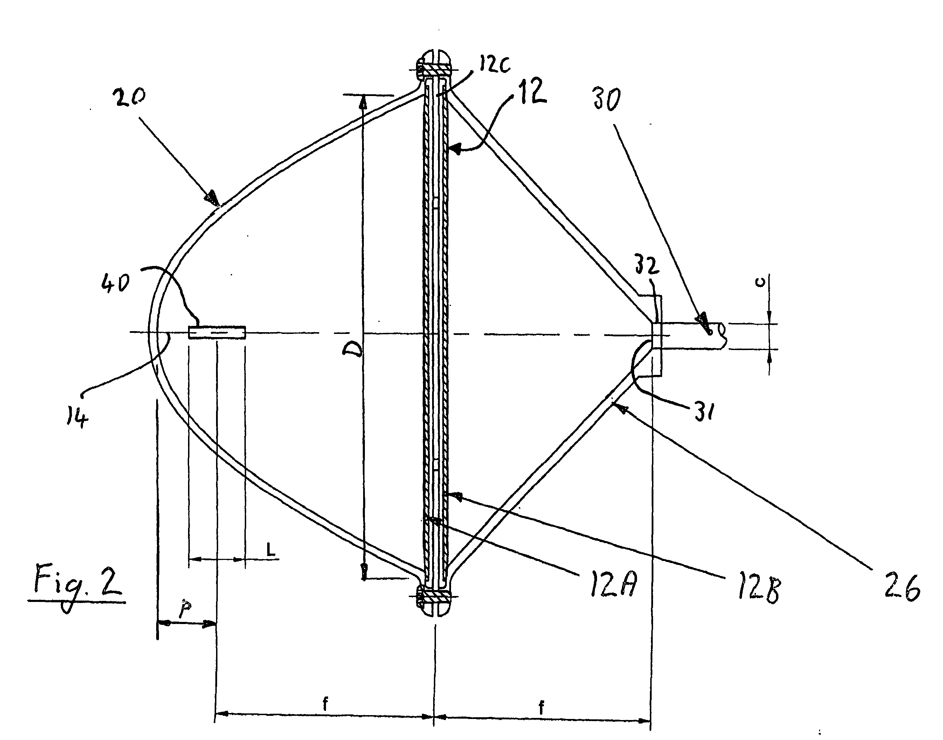

Fig. 2 shows how a light-transmitting optical fibre 30 (only one end of which is shown in Fig. 2) carries away light collected by the system 10, and for this purpose the optical fibre 30 is aligned with the axis 14, with the light-accepting area 32 at a light-accepting end 31 of the optical fibre 30 facing the second side 18 of the lens 12 and spaced therefrom by the focal length f. The end 31 of the optical fibre 30 is selected and arranged to have a high light acceptance angle, preferably at least 45°. The retroreflector 26 is centrally apertured and otherwise arranged to avoid occulting the light-accepting end 31 of the optical fibre 30. It is to be understood that other types of light transmitter (not shown) may be placed at the light-accepting area 32 and the invention is not limited to use with optical fibres.

The light collecting system 10 is rendered operative by locating a point source of light at the focus point 24, and suitably energising the source to emit light (e.g. substantially continuously, or in a controlled pulse mode). The point source is not shown per se in Fig. 1 for the sake of simplicity.

The point source can take any suitable form, and will, in practice, have a finite size rather than being a true point; however, a sufficiently compact source of light can be treated as a point source for the purposes of the present invention.

In operation, the light source located at the focus point 24 radially emits light in substantially all directions, and these directions of light emission can be subdivided into two sets of directions. The first set of directions of light emission includes all directions within the solid angle bounded by the paraboloidal reflecting surface 22, i.e. light emitted in the first set of directions is intercepted by the reflecting surface 22 without first being intercepted by any other means of modifying the path taken by this light. (It will subsequently be explained how light initially emitted in a second set directions is also intercepted and reflected by the surface 22, but only after path modification by means detailed below).

Light radially emitted by the point source in the first set of directions and first intercepted by the paraboloidal reflecting surface 22 is reflected by the surface 22 as a parallel beam of light. This is denoted in Fig. 1 by a typical light ray 34. On passing through the convergently focussing transmission lens 12, the light ray 34 (along with all other light rays emitted in the first set of directions) is focussed by the lens 12 onto the spot at the focal length f on the axis 14 beyond the second side 18 of the lens 12. Since this is the location of the light-accepting area 32, light emitted from the point source in the first set of directions is thereby directly collected and delivered onto the optical fibre 30. This is typically the whole extent of light collection in prior art light collection systems, but in the present invention, such light is considerably augmented, with consequent improvements in efficiency and performance, as will now be detailed.

Because the lens 12 is dimensioned and arranged completely to cover the aperture of the paraboloidal mirror 20, all light radially emitted from the point source located at the focus point 24 is initially intercepted either by the reflecting surface 22 or by the lens 12. Since the light initially intercepted by the reflecting surface 22 has been defined above as being the light emitted in the first set of directions, it follows that the light initially intercepted by the lens 12 is light emitted in the second set of directions. (In a practical realisation of the embodiment illustrated in Fig. 1, there may be apertures or absorbing surfaces or inappropriately oriented reflecting surfaces such that some of the light emitted by the point source is wasted and can therefore be said to have been emitted neither in the first set of directions nor in the second set of directions. Such a situation may arise because of the presence of mounting/supporting components, electrical cables, cooling ducts and ventilation apertures, as well as internal features of the lamp constituting the point source, e.g. internal electrodes. However, further discussion of the first embodiment of light collecting system 10 will disregard such imperfections and will proceed with an idealised system for the sake of simplicity.)

Since the point source of light 24 is located on the axis 14 at the focal length f from the lens 12 on the first side 16 thereof, the light radially emitted in the second set of directions is first intercepted by the lens 12 and convergently focussed thereby into a parallel beam of light on the second side 18 of the lens 12. This is denoted in Fig. 1 by a typical light ray 36. On passing through the lens 12, the light ray 36 and all other light rays emitted in the second set of directions are directed as a parallel beam of light onto the retroreflector 26. The retroreflecting array of internal reflecting surfaces 28 reflects the light ray 36 (and all other components of the parallel beam) back in the opposite direction towards the second side 18 of the lens 12, still as a parallel beam of light. Upon passing through the lens 12 for a second time (on this occasion, from the second side 18 to the first side 16), the initially parallel beam of retroreflected light is convergently focussed by the lens 12 onto the spot at the focal length f on the axis 14 beyond the first side 16 of the lens 12. Since this is the location of the point source of light, as well as being the focus point 24 of the paraboloidal reflecting surface 22, light radially emitted from the point source in the second set of directions (and therefore not immediately collected in contrast to the light emitted in the first set of directions) is returned to the point source in a radially convergent manner. Disregarding any scattering and/or absorption of the returned ray 36 in passage through or past the point source of light, the returned ray 36 becomes a radially emergent ray within the first set of directions of light emission, as denoted by the reference 38 (in order to distinguish from the initially emitted ray 36). As a consequence of this conversion of light radially emitted in the second set of directions into (effectively) light radially emitted in the first set of directions, the light ray 38 and its converted companions are intercepted by the paraboloidal reflecting surface 22, reflected as a parallel beam onto the first side 16 of the lens 12, and convergently focussed by the lens 12 onto the light-accepting end 31 of the optical fibre 30. Thereby light emitted in the second set of directions (i.e. away from the paraboloidal reflecting surface 22) is added to the light collected from the point source and delivered to the optical fibre 30, such extra light constituting the extra output obtainable from the light collecting system 10 in contrast to a prior art system.

Given ideal reflectivity and zero transmission losses, the arrangement of the invention has the unique property of coupling 100% of the light emitted from a point source (typically distributed over 4pi steradians) into a fibre.

Given a true point source and no aberrations, the fibre diameter could be vanishingly small, but in practice providing a significantly larger fibre diameter allows a relaxation of the requirements of a point source emitter and thus enables the arrangement to provide efficient coupling from extended sources as will subsequently be detailed with reference to Fig. 2.

The diameter D and focal length f of the transmission lens 12 as well as the focal length p of the parabolic mirror 20 are chosen to balance efficiency of light collection against cost. If a point light source is used, as shown in Fig. 1, then focal length p may be selected independently of focal length f.

If an extended light source 40 is used, as shown in Fig. 2, then the larger the Fresnel number F of the lens 12, where F is the ratio of the diameter D of the lens to the focal length f, the more efficient the light collection. The diameter c of an optical fibre 30 required to receive all the light from an extended source 40 of length L as though it were a point source is given by

$$C = fL/2p$$

Where f is the focal length of lens 12 and p is the focal length of paraboloidal mirror 20. The maximum length $L_{max}$ of an extended source 40 which will couple efficiently into a fibre 30 of diameter c is given by

$$L_{max} = 2pc/f$$

The diameter D and focal length f of the lens 12 together with the parabola's length are linked by the relationship

$$D = 4p(1+f/p)^{0.5}$$

This enables the maximum length of the extended source to be expressed simply in terms of the fibre diameter c and the Fresnel number F (D/f)

$$L_{max} = c(1+(1+F^2/4)^{0.5})$$

As an example, when using a fibre bundle of diameter 8 mm and a lens of F2, the maximum length of the extended source $L_{max}$ is 19.3 mm. Increasing the speed of the lens to F4 increases the acceptable length Lmax to 26 mm.

Furthermore F can be defined in terms of x, where x = f/p, by the expression

$$F = 4(1+x)^{0.5}/x$$

Thus for a given F value the relationship between f and p is established. The invention allows the choice of parameters and the selection of practical components in the apparatus of the invention. Generally, the larger the F values of the lens 12 the more efficient the collection of light, but there is a practical limit.

A typical arrangement might utilise a lens of F4, which gives a value for f/p of 1.62 and allows a source 40 of length 26 mm. To fit such a source within and along the parabola axis 14 requires a minimum value of p of 30 mm. The corresponding lens focal length f would then be 48 mm and the diameter D of the lens would be 192 mm. This could be realised with a back to back combination of two Fresnel lenses 12A and 12B each of focal length 96 mm. Such components are all available commercially. This combination of components would couple efficiently into a fibre bundle of 8 mm diameter. It is to be understood that other dimensions and optical parameter are possible and fall within the scope of the invention.

Although described in terms of coupling into a fibre the arrangement has a more general application in that it provides for more efficient coupling of the light from a point source or from an extended source onto a well defined area. Such an area could be that of an exit aperture of a handpiece similar to current designs. The use of more efficient coupling would, in this case, act to improve the performance whilst reducing the drive requirements of the lamp. The light collecting system of Fig. 1 could be modified in such a way by removing the fibre 30 and leaving open the central aperture in the retroreflector 26.

A particular novel arrangement by which specific medical purpose could be improved is to split the lens into two axially separated components 12A and 12B, as shown in Figs. 1 and 2. Such a disposition of components allows for the introduction of an absorbing filter into the gap 12C between the two lens parts 12A and 12B. However the invention will function with a single solid lens 12 in place of the two lenses 12A and 12B.

If two lenses are used with a gap 12C therebetween, a suitable filter could be a fluid chosen to absorb unwanted or undesirable wavelengths emitted from the light source. Preferably such a fluid could be chosen as a dyestuff such that the absorbed energy was re-emitted within a favourable wavelength band. For the particular medical applications that such a device could address a choice would be made of the filters used to maximise the energy output in the band of wavelengths corresponding to the optimal treatment regime.

The lens 12, whether a single-piece lens (not shown) or a two-piece lens, as shown in Figs. 1 and 2, is preferably suitably modified when the point source of light is replaced by an extended source of light, as detailed below.

A specific choice, for example, would be the use of a straight tubular krypton lamp 40 linearly extended along a given axis, and with that axis aligned with the lens axis 14 as shown in Fig. 2, whereby substantially more output can be obtained between 700 nm and 1000 nm than the currently used xenon-filled lamps.

Another specific choice would be a mercury-filled lamp giving a significant fraction of its output in the green part of the spectrum and being especially suited to continuous or quasi-continuous performance.

The applications for which such an optical arrangement can prove effective include hair removal (typically using wavelengths longer than 650 mm and preferably using a krypton lamp with single operational pulses between 1 and 10 mS or trains of operational pulses separated by between 5 and 50 mS), treatment of certain vascular disorders where similar wavelengths can be effective in somewhat longer pulses (30-100 mS), treatment of similar disorders but with quasi-continuous light of a shorter wavelength (550-700 nm) or the inclusion of longer wavelength infra-red emission (>1000 nm) for non-ablative tissue remodelling.

Such a range of applications may well extend given the improved efficiency of light collection and delivery provided by the invention.

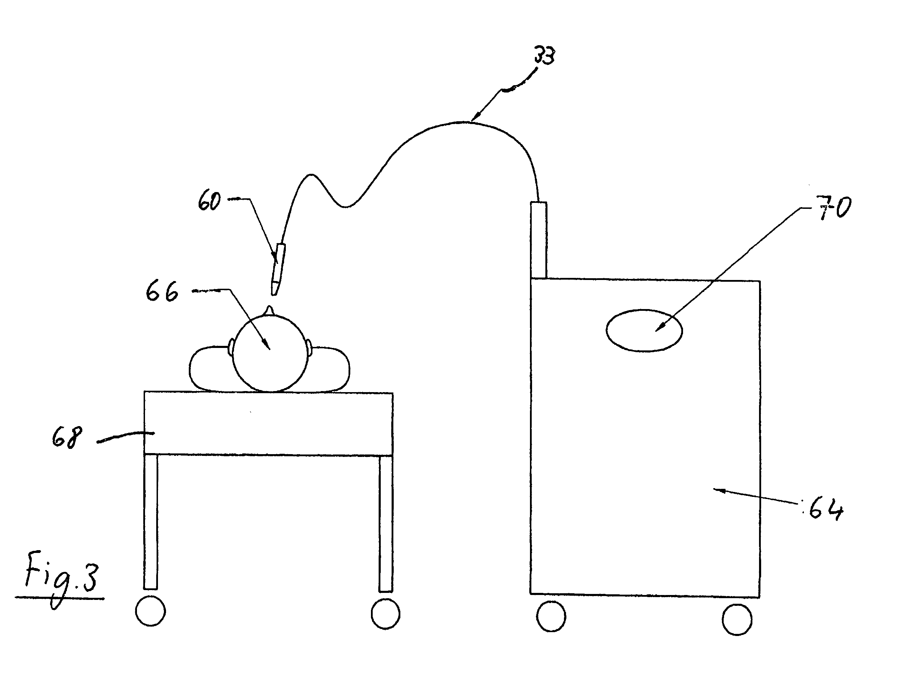

Fig. 3 shows the operation of a remote handpiece according to the invention. The handpiece 60 is connected to a housing 64 containing the light source (not shown) by an optical cable 33 comprising a bundle of optical fibres 30. The light source is a light collecting system 10 of the sort shown in Figs. 1 and 2, and is controlled by means of a control panel 70 on the housing 64. The patient 66 lies on a bed 68, and the handpiece 60 is held by an operator (not shown). The handpiece 60 has no electrical light source therein, and is relatively light so can be moved readily over the patient 66. The handpiece simply directs the light from the optical cable 33 to the skin of the patient 66. If required the handpiece may be provided with an electrical switch means to control the operation of the light source.

The light collecting system 10 of the invention may be provided in other forms of apparatus. For example a portable handpiece may be provided which includes an electrical light source and the light collecting system within the handpiece. Such a handpiece may be battery operated or may be connected to a power supply by an electrical cable.

While certain modifications and variations of the invention have been described above, the invention is not restricted thereto, and other modifications and variations can be adopted without departing from the scope of the invention. For example, the lens 12 (or the lens parts 12A and 12B) may be given anti-reflection coatings which are preferably selected to maximise optical performance at selected wavelength bands. Similarly, the reflecting surfaces 22 and 28 may be given reflection coatings selected to maximise optical performance at selected wavelength bands. The optical fibre 30 may be replaced by a bundle of optical fibres or an optical cable.

**Claims**

1.  An optical arrangement for the collection of light from a light source (40) and for delivering the collected light to a light-accepting area (32), the optical arrangement comprising a lens (12), a first reflector (20), and a second reflector (26),
    the lens (12) comprising a convergently focussing transmission lens arranged on a longitudinal axis (14) extending therethrough, the lens (12) having a focal length (f), a first side (16) and a second side (18),
    **characterised in that**:

    the first reflector (20) comprises a paraboloidal reflecting surface (22) disposed on the first side (16) of the lens (12) with the paraboloidal reflecting surface (22) facing towards the first side (16) of the lens (12), the focus point (24)

of the paraboloidal reflecting surface (22) being distant from the lens (12) by substantially the focal length of the lens (f), and
the second reflector (26) comprises a retroreflecting array of reflecting surfaces (28) disposed on the second side (18) of the lens (12) and facing towards the second side (18) of the lens (12);

wherein the light-accepting area (32) is located on the second side (18) of the lens (12) substantially on the longitudinal axis (14) of the lens (12) and distant from the lens (12) substantially by the focal length (f), such that:

light emitted from the light source (40) in a first set of directions towards the first reflector (20) is intercepted by the paraboloidal reflecting surface (22) and reflected towards the lens (12) as a substantially parallel beam of light to be convergently focussed by the lens (12) substantially onto the light-accepting area (32), while light emitted from the light source (40) in a second set of directions is intercepted by the lens (12) without first being intercepted by the paraboloidal reflecting surface (22), the light emitted in the second set of directions being convergently focussed by the lens (12) and transmitted therethrough as a substantially parallel beam of light to be retroreflected by the retroreflecting array of reflecting surfaces (28) of the second reflector (26), retransmitted through the lens (12) and convergently focussed thereby substantially onto the point source thereby to augment light emitted in the first set of directions with light initially emitted in the second set of directions and ultimately to augment the light delivered to the light-accepting area (32).

2.  An optical arrangement as claimed in Claim 1 wherein the paraboloidal reflecting surface (22) is substantially circularly symmetrical about the longitudinal axis (14) of the first reflector (20).

3.  An optical arrangement as claimed in any preceding Claim wherein the second reflector (26) is substantially circularly symmetrical about the longitudinal axis (14) of the lens (12).

4.  An optical arrangement as claimed in any preceding Claim further comprising a light source (40) located at the focus point (24) of the paraboloidal reflecting surface (22).

5.  An optical arrangement as claimed in Claim 4 wherein the light source (40) is a point source.

6.  An optical arrangement as claimed in Claim 4 wherein the light source (40) is an extended source extending substantially linearly along the longitudinal axis (14) of the lens (12).

7. An optical arrangement as claimed in any preceding Claim wherein the lens (12) is formed as two longitudinally separate components (12A, 12B) having a gap (12C) mutually separating these two components (12A, 12B) of the lens (12), the gap (12C) being adapted to receive optical filter means for predetermined spectral modification of light collected by the optical arrangement.

8. A light collecting system (10) comprising an optical arrangement according to any of Claims 1 to 3, further including a light source (40) and a light-transmitting optical fibre (30), the light source (40) being located at the focus point (24) of the paraboloidal reflecting surface (22), and a light-accepting end (31) of the optical fibre (30) being located at the light-accepting area (32) on the second side (18) of the lens (12) substantially on the longitudinal axis (14) of the lens (12) and distant from the lens (12) substantially by the focal length (f).

9. A light collecting system (10) as claimed in Claim 8, wherein the longitudinal axis of the optical fibre (30) at the light accepting end (31) is substantially coincident with the longitudinal axis (14) of the lens (12).

10. A light collecting system (10) as claimed in Claim 8 or 9, wherein the optical fibre (30) is connected at its end remote from the light accepting end (31) to a handpiece (60) adapted to transmit light from the optical fibre (30) to an object to be treated by light.

11. A light-emitting handpiece (60) comprising an optical arrangement according to any of Claims 1 to 3, further including a light source (40) located at the focus point (24) of the paraboloidal reflecting surface (22), the handpiece (60) being adapted to be manually manipulable whereby light from the handpiece (60) can be directly applied to a selected portion of the skin of a patient (66) or directly applied to any other selected light-receiving surface.

**Patentansprüche**

1. Eine optische Anordnung zum Sammeln von Licht von einer Lichtquelle (40) und zur Abgabe des gesammelten Lichts an einen Licht annehmenden Bereich (32), wobei die optische Anordnung eine Linse (12), einen ersten Reflektor (20) und einen zweiten Reflektor (26) beinhaltet, wobei die Linse (12) eine konvergent fokussierende Übertragungslinse, die auf einer sich durch diese erstreckenden Längsachse (14) angeordnet ist, beinhaltet, wobei die Linse (12) eine Brennweite (f), eine erste Seite (16) und eine zweite Seite (18) aufweist,

**dadurch gekennzeichnet, dass**:

der erste Reflektor (20) eine reflektierende Parabolfläche (22) aufweist, die auf der ersten Seite (16) der Linse (12) platziert ist, wobei die reflektierende Parabolfläche (22) der ersten Seite (16) der Linse (12) zugewandt ist und der Brennpunkt (24) der reflektierenden Parabolfläche (22) um im Wesentlichen die Brennweite der Linse (f) von der Linse (12) entfernt liegt, und

der zweite Reflektor (26) eine rückstrahlende Gruppierung von reflektierenden Flächen (28) beinhaltet, die auf der zweiten Seite (18) der Linse (12) platziert und der zweiten Seite (18) der Linse (12) zugewandt sind;

wobei sich der Licht annehmende Bereich (32) auf der zweiten Seite (18) der Linse (12) befindet, und zwar im Wesentlichen auf der Längsachse (14) der Linse (12) und im Wesentlichen um die Brennweite (f) von der Linse (12) entfernt, so dass:

von der Lichtquelle (40) in einen ersten Satz von Richtungen zum ersten Reflektor (20) hin emittiertes Licht von einer reflektierenden Parabolfläche (22) abgefangen und zur Linse (12) hin als ein im Wesentlichen paralleler Lichtstrahl reflektiert wird, um von der Linse (12) im Wesentlichen auf den Licht annehmenden Bereich (32) konvergent fokussiert zu werden,

während von der Lichtquelle (40) in einen zweiten Satz von Richtungen emittiertes Licht von der Linse (12) abgefangen wird, ohne vorher von der reflektierende Parabolfläche (22) abgefangen zu werden, wobei das in den zweiten Satz von Richtungen emittierte Licht von der Linse (12) konvergent fokussiert und durch diese hindurch als ein im Wesentlichen paralleler Lichtstrahl übertragen wird, um von der rückstrahlenden Gruppierung der reflektierenden Flächen (28) des zweiten Reflektors (26) rückgestrahlt, durch die Linse (12) erneut übertragen und dadurch im Wesentlichen auf die Punktquelle konvergent fokussiert zu werden, um in den ersten Satz von Richtungen emittiertes Licht mit anfänglich in den zweiten Satz von Richtungen emittiertem Licht zu verstärken und letztendlich das an den Licht annehmenden Bereich (32) abgegebene Licht zu verstärken.

2. Optische Anordnung gemäß Anspruch 1, wobei die reflektierende Parabolfläche (22) um die Längsachse (14) des ersten Reflektors (20) im Wesentlichen kreisförmig symmetrisch ist.

**3.** Optische Anordnung gemäß einem der vorhergehenden Ansprüche, wobei der zweite Reflektor (26) um die Längsachse (14) der Linse (12) im Wesentlichen kreisförmig symmetrisch ist.

**4.** Optische Anordnung gemäß einem der vorhergehenden Ansprüche, die ferner eine Lichtquelle (40) beinhaltet, die sich am Brennpunkt (24) der reflektierenden Parabolfläche (22) befindet.

**5.** Optische Anordnung gemäß Anspruch 4, wobei die Lichtquelle (40) eine Punktquelle ist.

**6.** Optische Anordnung gemäß Anspruch 4, wobei die Lichtquelle (40) eine erweiterte Quelle ist, die sich im Wesentlichen linear entlang der Längsachse (14) der Linse (12) erstreckt.

**7.** Optische Anordnung gemäß einem der vorhergehenden Ansprüche, wobei die Linse (12) als zwei längs getrennte Komponenten (12A, 12B) gebildet ist, die einen Zwischenraum (12C) aufweisen, der diese zwei Komponenten (12A, 12B) der Linse (12) wechselseitig trennt, wobei der Zwischenraum (12C) angepasst ist, um ein optisches Filtermittel zur vorbestimmten Spektralmodifikation von von der optischen Anordung gesammeltem Licht zu empfangen.

**8.** Ein Licht sammelndes System (10), das eine optische Anordnung gemäß einem der Ansprüche 1 bis 3 beinhaltet und ferner eine Lichtquelle (40) und eine Licht übertragende optische Faser (30) umfasst, wobei sich die Lichtquelle (40) am Brennpunkt (24) der reflektierenden Parabolfläche (22) befindet und sich ein Licht annehmendes Ende (31) der optischen Faser (30) beim Licht annehmenden Bereich (32) auf der zweiten Seite (18) der Linse (12) befindet, und zwar im Wesentlichen auf der Längsachse (14) der Linse (12) und im Wesentlichen um die Brennweite (f) von der Linse (12) entfernt.

**9.** Licht sammelndes System (10) gemäß Anspruch 8, wobei die Längsachse der optischen Faser (30) am Licht annehmenden Ende (31) im Wesentlichen mit der Längssachse (14) der Linse (12) übereinstimmt.

**10.** Licht sammelndes System (10) gemäß Anspruch 8 oder 9, wobei die optische Faser (30) an ihrem vom Licht annehmenden Ende (31) abseitigen Ende mit einem Handstück (60) verbunden ist, dass angepasst ist, um Licht von einer optischen Faser (30) auf ein mit Licht zu behandelndes Objekt zu übertragen.

**11.** Ein Licht emittierendes Handstück (60), das eine optische Anordnung gemäß einem der Ansprüche 1 bis 3 beinhaltet und ferner eine Lichtquelle (40) umfasst, die sich am Brennpunkt (24) der reflektierenden Parabolfläche (22) befindet, wobei das Handstück (60) angepasst ist, um manuell bedienbar zu sein, wodurch Licht vom Handstück (60) direkt auf einen ausgewählten Abschnitt der Haut eines Patienten (66) oder direkt auf jede andere ausgewählte Licht empfangende Fläche angewendet werden kann.

## Revendications

**1.** Un agencement optique destiné à la collection de lumière à partir d'une source de lumière (40) et destiné à amener la lumière collectée à une zone d'admission de lumière (32), l'agencement optique comportant une lentille (12), un premier réflecteur (20), et un deuxième réflecteur (26), la lentille (12) comportant une lentille de transmission à focalisation convergente agencée sur un axe longitudinal (14) s'étendant à travers celle-ci, la lentille (12) ayant une longueur focale (f), un premier côté (16) et un deuxième côté (18), **caractérisé en ce que** :

le premier réflecteur (20) comporte une surface réfléchissante parabolique (22) disposée sur le premier côté (16) de la lentille (12), la surface réfléchissante parabolique (22) étant tournée vers le premier côté (16) de la lentille (12), le point foyer (24) de la surface réfléchissante parabolique (22) étant éloigné de la lentille (12) substantiellement de la longueur focale de la lentille (f), et le deuxième réflecteur (26) comporte un arrangement rétroréfléchissant de surfaces réfléchissantes (28) disposées sur le deuxième côté (18) de la lentille (12) et tournées vers le deuxième côté (18) de la lentille (12) ;

dans lequel la zone d'admission de lumière (32) est située sur le deuxième côté (18) de la lentille (12) substantiellement sur l'axe longitudinal (14) de la lentille (12) et éloignée de la lentille (12) substantiellement de la longueur focale (f), de telle sorte que :

de la lumière émise à partir de la source de lumière (40) dans un premier ensemble de directions vers le premier réflecteur (20) est interceptée par la surface réfléchissante parabolique (22) et réfléchie vers la lentille (12) sous forme d'un faisceau de lumière substantiellement parallèle devant être focalisé de façon convergente par la lentille (12) substantiellement sur la zone d'admission de lumière (32), tandis que de la lumière émise à partir de la source de lumière (40) dans un deuxième ensemble de directions est interceptée par la lentille (12) sans être interceptée d'abord par la surface réfléchissante parabolique (22), la lumière émise dans le deuxième ensemble de directions étant focalisée de façon convergente par la lentille (12) et transmise à travers celle-ci sous forme d'un faisceau de lumière substantiellement parallèle devant être rétroréfléchi par l'arrangement rétroréfléchissant de surfaces réfléchissantes (28) du deuxième réflecteur (26), retransmise au travers de la lentille (12) et focalisée de façon convergente par celle-ci substantiellement sur la source ponctuelle pour augmenter de ce fait de la lumière émise dans le premier ensemble de directions avec de la lumière émise initialement dans le deuxième ensemble de directions et pour augmenter en définitive la lumière amenée à la zone d'admission de lumière (32).

2. Un agencement optique tel que revendiqué dans la revendication 1 dans lequel la surface réfléchissante parabolique (22) est symétrique de façon substantiellement circulaire autour de l'axe longitudinal (14) du premier réflecteur (20).

3. Un agencement optique tel que revendiqué dans n'importe quelle revendication précédente dans lequel le deuxième réflecteur (26) est symétrique de façon substantiellement circulaire autour de l'axe longitudinal (14) de la lentille (12).

4. Un agencement optique tel que revendiqué dans n'importe quelle revendication précédente comportant de plus une source de lumière (40) située au point foyer (24) de la surface réfléchissante parabolique (22).

5. Un agencement optique tel que revendiqué dans la revendication 4 dans lequel la source de lumière (40) est une source ponctuelle.

6. Un agencement optique tel que revendiqué dans la revendication 4 dans lequel la source de lumière (40) est une source étendue s'étendant de façon substantiellement linéaire le long de l'axe longitudinal (14) de la lentille (12).

7. Un agencement optique tel que revendiqué dans n'importe quelle revendication précédente dans lequel la lentille (12) est formée comme deux composants distincts longitudinalement (12A, 12B) ayant un écartement (12C) séparant mutuellement ces deux composants (12A, 12B) de la lentille (12), l'écartement (12C) étant adapté pour recevoir des moyens formant filtre optique destinés à la modification spectrale prédéterminée de lumière collectée par l'agencement optique.

8. Un système de collection de lumière (10) comportant un agencement optique selon n'importe lesquelles des revendications 1 à 3, comprenant de plus une source de lumière (40) et une fibre optique transmettant de la lumière (30), la source de lumière (40) étant située au point foyer (24) de la surface réfléchissante parabolique (22), et une extrémité d'admission de lumière (31) de la fibre optique (30) étant située à la zone d'admission de lumière (32) sur le deuxième côté (18) de la lentille (12) substantiellement sur l'axe longitudinal (14) de la lentille (12) et éloignée de la lentille (12) substantiellement de la longueur focale (f).

9. Un système de collection de lumière (10) tel que revendiqué dans la revendication 8, dans lequel l'axe longitudinal de la fibre optique (30) à l'extrémité d'admission de lumière (31) coïncide substantiellement avec l'axe longitudinal (14) de la lentille (12).

10. Un système de collection de lumière (10) tel que revendiqué dans la revendication 8 ou la revendication 9, dans lequel la fibre optique (30) est raccordée à son extrémité à distance de l'extrémité d'admission de lumière (31) à une pièce à main (60) adaptée pour transmettre de la lumière depuis la fibre optique (30) jusqu'à un objet devant être traité par ta lumière.

11. Une pièce à main électroluminescente (60) comportant un agencement optique selon n'importe lesquelles des revendications 1 à 3, comprenant de plus une source de lumière (40) située au point foyer (24) de la surface réfléchissante parabolique (22), la pièce à main (60) étant adaptée pour pouvoir être manipulée manuellement grâce à quoi de la lumière provenant de la pièce à main (60) peut être appliquée directement sur une portion sélectionnée de la peau d'un patient (66) ou appliquée directement sur toute autre surface de réception de lumière sélectionnée.

Fig. 1

Fig.2

Fig.3

EP 1 215 520 B1